# EUROPÄISCHE PATENTSCHRIFT

(11) **EP 1 080 478 B1**
(45) Veröffentlichungstag und Bekanntmachung des Hinweises auf die Patenterteilung: **12.12.2001**
(21) Anmeldenummer: 99924774.5
(22) Anmeldetag: 08.04.1999
(51) Int. Cl.: H01G 2/08, H01G 9/08

(54) **ALUMINIUM-ELEKTROLYTKONDENSATOR**
ALUMINUM ELECTROLYTIC CAPACITOR
CONDENSATEUR ELECTROLYTIQUE EN ALUMINIUM

(30) Priorität: 20.04.1998 DE 19817493
(43) Veröffentlichungstag der Anmeldung: 07.03.2001
(73) Patentinhaber: EPCOS AG, 81541 München (DE)
(72) Erfinder: BEIER, Dieter, D-91058 Erlangen (DE); DANZER, Klaus, D-89188 Merklingen (DE); FETZER, Jürgen, D-89547 Gerstetten (DE); GAYER, Manfred, D-91334 Hemhofen (DE); NIEDERBERGER, Gerhard, D-89547 Gerstetten (DE); NEUMEISTER, Stephan, D-89520 Heidenheim (DE); RAIBLE, Christoph, D-82211 Herrsching (DE); REDER, Thomas, D-90408 Nürnberg (DE); SCHWEIKERT, Wilhelm, D-89522 Heidenheim (DE); SPRINGMANN, Walter, D-91325 Adelsdorf (DE); WILL, Norbert, D-89522 Heidenheim (DE)
(74) Vertreter: Epping, Wilhelm, Dipl.-Ing.
(86) Internationale Anmeldenummer: DE9901025
(87) Internationale Veröffentlichungsnummer: WO9954893

(56) Entgegenhaltungen:
- DE-C- 869 509
- DE-U- 9 203 739
- US-A- 4 447 730

## Beschreibung

Die Erfindung betrifft einen Aluminium-Elektrolytkondensator, insbesondere zur Anwendung in Kondensatorbatterien, der in ein mit Kühlrippen versehenes Gehäuse eingebaut ist.

Aus dem DE 92 03 739 U1 ist ein Gehäuse für elektrische Kondensatoren bekannt, das aus Kunststoff besteht, wobei an der Außenseite des Gehäuses axiale Längsrippen zur Verbesserung der Wärmeabfuhr angeordnet sind.

Beim Betrieb von Aluminium-Elektrolytkondensatoren mit überlagerter Wechselspannung entsteht aufgrund des relativ hohen Ersatzserienwiderstandes dieses Bauelementes eine erhebliche Verlustleistung in Form von Wärme. Diese muß über das Gehäuse abgeleitet werden, wobei die Gehäuse von Aluminium-Elektrolytkondensatoren bisher aus zylindrischen, als Fließpreßteile hergestellten Aluminiumbechern mit glatter Wandung bestehen. Als elektrische Isolierung werden üblicherweise Schrumpfschläuche oder Kunststoffbecher auf den Aluminiumbecher aufgebracht, was wiederum gegenüber blanken Gehäusen eine bessere Wärmeabstrahlung zur Folge hat. Zur weiteren Verbesserung der Wärmeabfuhr wird der Kondensator auf Kühlbleche bzw. Kühlkörper montiert und/oder mit Luft angeblasen. Dabei entsteht ein zusätzlicher Aufwand für Kühlkörper und Befestigungsmaterial. Werden viele Elektrolytkondensatoren zu Reihen- und Parallelschaltungen zusammenmontiert (sogenannte Kondensatorbatterien) fallen nochmals erhebliche Kosten für die erforderlichen Chassis an.

Aufgrund der hohen zusätzlichen Kosten wurde der Vorteil einer höheren Belastbarkeit aufgrund forcierter Kühlung mit Kühlkörpern meistens nicht genutzt. Bei der Auslegung der Schaltung wurde in der Regel nur natürliche Kühlung oder allenfalls Luftkühlung unterstellt.

Aufgabe der vorliegenden Erfindung ist es, einen Kondensator der eingangs genannten Art derart weiterzubilden, daß eine effektive Wärmeableitung bei verringerten Herstell- und Montagekosten erfolgt.

Diese Aufgabe wird erfindungsgemäß dadurch gelöst, daß das Gehäuse als Aluminium-Gußteil ausgebildet ist.

Damit wird der Vorteil erzielt, daß derartige Gehäuse einerseits kostengünstig herzustellen sind und andererseits sich besonders vorteilhaft zur Verschaltung in Kondensatorbatterien eignen, wobei außer den Kühlrippen auch die zur Verringerung des Wärmewiderstandes in radialer Richtung notwendigen dickeren Wandstärken realisierbar sind.

Es sind zwar neben den eingangs angeführten und für Elektrolytkondensatoren weniger geeigneten Kunststoffgehäusen mit Kühlrippen auch metallische Gehäuse mit Kühlrippen bekannt, jedoch bestehen diese aus dünnem Blech, wobei die Kühlrippen aufgeschrumpft oder festgeschweißt sind (DE-A-869509). Durch den gesonderten Arbeitsschritt des Aufschrumpfens bzw. Festschweißens von Kühlrippen verteuert sich die Herstellung derartiger Gehäuse erheblich, wobei auch Behälter aus dünnem Blech einen höheren Wärmewiderstand in radialer Richtung aufweisen, als dies beim erfindungsgemäßen Kondensator mit Aluminium-Gußteil ist.

Vorteilhafte Ausgestaltungen des Gegenstandes der Erfindung sind in den Unteransprüchen angeführt.

Die Erfindung wird anhand von Ausführungsbeispielen näher erläutert.

In der dazugehörenden Zeichnung zeigen
- Figur 1: ein Kondensatorgehäuse aus einem Aluminium-Gußteil,
- Figur 2: eine Ausführungsform mit einem Mehrfachgehäuse und
- Figur 3 und 4: Verschaltungen mit einer Bandleitung.

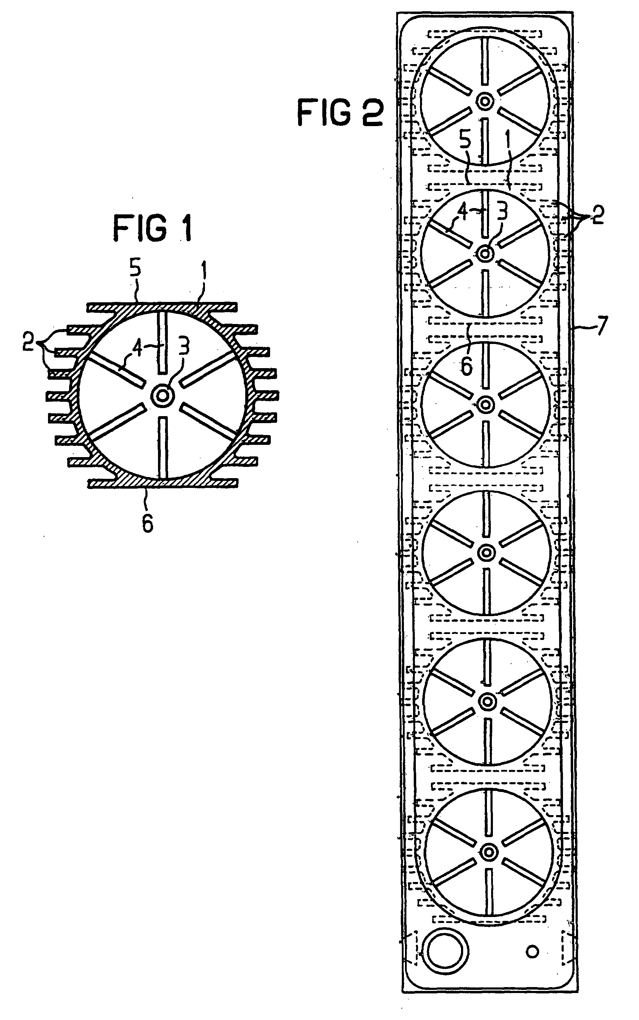

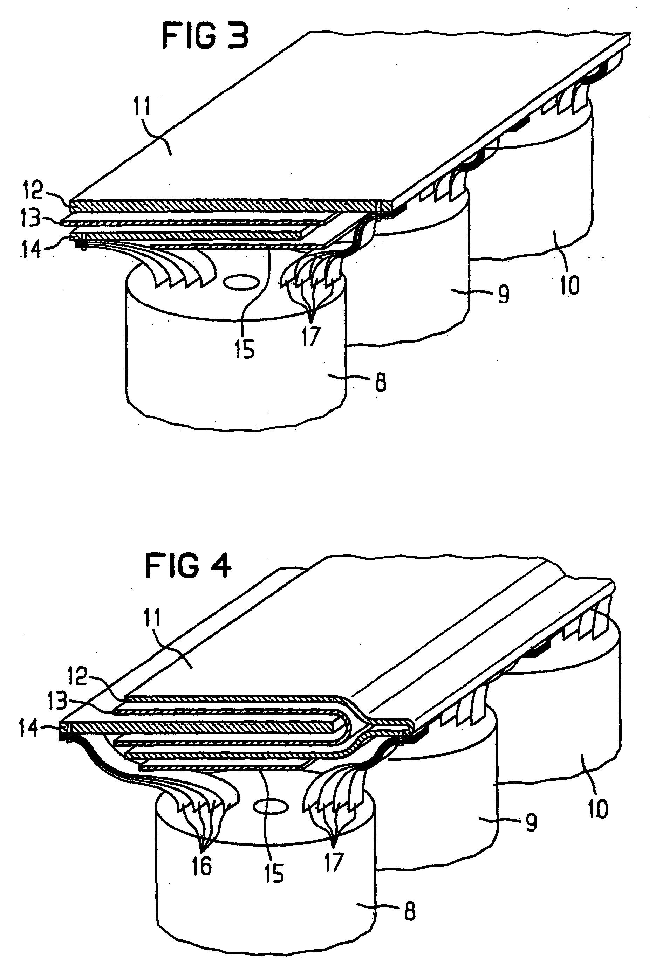

In der Figur 1 ist ein Gehäuse 1 für einen Aluminium-Elektrolytkondensator dargestellt, das aus einem Aluminium-Gußteil mit angeformten Kühlrippen 2 besteht. Am Boden des Gehäuses 1 befindet sich ein Dorn 3, der zur Zentrierung des Kondensatorwickels dient. Ferner sind am Boden des Gehäuses 1 radial angeordnete Rippen 4 angeordnet, die zur einer rüttelsicheren Fixierung des Kondensatorwickels dienen. Der Wärmefluß aus dem Kondensatorwickel erfolgt hierbei primär über die überstehende Kathode und den Becherboden, wobei die Kühlrippen 2 ihre volle Wirkung demnach erst bei geringem Wärmewiderstand entlang der Becherwandung erzielen. An zwei gegenüberliegenden Seiten ist das Gehäuse 1 flächig ausgebildet, wodurch mehrere Kondensatorgehäuse raumsparend nebeneinander angeordnet werden können wie es in Figur 2 dargestellt ist.

Gemäß Figur 2 befinden sich die einzelnen Gehäuse innerhalb eines äußeren Gehäuses 7, wodurch eine besonders einfache Montage des Mehrfachgehäuses 7 gewährleistet ist. Die Einzelgehäuse 1 sind dabei mit ihren flächig ausgebildeten Seiten 5, 6 gegeneinander angeordnet.

In Figur 3 ist die Parallelverschaltung von Kondensatorwikkeln 8, 9, 10, ... dargestellt, die in ein Gehäuse gemäß Figur 2 eingebaut sind. Die Verschaltung erfolgt mittels einer Bandleitung 11, die als einfacher "Sandwich" ausgebildet ist. Zwischen den beiden Elektroden 12 und 14 befindet sich eine Isolierung 13. Weiterhin ist eine zusätzliche Isolierung 15 unterhalb der Elektrode 14 angeordnet. Die Elektroden 12, 14 sind mit den Anoden- 16 bzw. Kathoden-Anschlußfahnen 17 verbunden.

In Figur 4 ist eine weitere Ausführungsform einer Bandleitung 11 dargestellt, die einen koaxialen Aufbau besitzt. Im übrigen enthält Figur 4 die gleichen Bezugszeichen wie Figur 3.

Weiterhin ist es möglich, den Minuspol über das Gehäuse 1 bzw. über die Abschlußplatte zu führen und den Pluspol extern zu verschalten.

Weiterhin besteht die Möglichkeit, in das Metallgehäuse 1 einen isolierenden Becher aus Kunststoff (Tiefziehteil) einzulegen oder die Innenwand mit einem isolierenden Material zu beschichten (z. B. Gummibeschichtung).

Es ist auch möglich, die Verschaltung der Wickel intern über Aluminium-Metallbänder oder extern (z. B. über Kupferplatten) vorzunehmen.

Weiterhin ist es möglich, die Kühlrippen nicht nur axial, sondern auch radial und/oder am Becherboden anzuordnen.

## Patentansprüche

1. Aluminium-Elektrolytkondensator, insbesondere zur Anwendung in Kondensatorbatterien, der in ein mit Kühlrippen (2) versehenes Gehäuse (1) eingebaut ist,
**dadurch gekennzeichnet,**
**daß** das Gehäuse (1) als Aluminium-Gußteil ausgebildet ist.

2. Aluminium-Elektrolytkondensator nach Anspruch 1,
**dadurch gekennzeichnet,**
**daß** die Kühlrippen (2) an zwei gegenüberliegenden Gehäuseseiten (5, 6) flächig ausgebildet sind.

3. Aluminium-Elektrolytkondensator nach Anspruch 1 oder 2,
**dadurch gekennzeichnet,**
**daß** das Gehäuse (7) zur Aufnahme mehrerer Kondensatoren (8, 9, 10, ...) ausgebildet ist.

4. Aluminium-Elektrolytkondensator nach Anspruch 3,
**dadurch gekennzeichnet,**
**daß** das Gehäuse (1) auf seiner Innenseite eine isolierende Beschichtung aufweist.

5. Aluminium-Elektrolytkondensator nach Anspruch 3,
**dadurch gekennzeichnet,**
**daß** im Gehäuse (1) isolierende Becher zur Aufnahme der Kondensatoren angeordnet sind.

6. Aluminium-Elektrolytkondensator nach einem der Ansprüche 1 bis 5,
**dadurch gekennzeichnet,**
**daß** die Verschaltung mehrerer Kondensatoren (8, 9, 10, ...) in einer Kondensatorbatterie mittels sandwichartig ausgebildeter Bandleitungen (11) erfolgt.

7. Aluminium-Elektrolytkondensator nach Anspruch 6,
**dadurch gekennzeichnet,**
**daß** die Bandleitungen (11) koaxial aufgebaut sind.

## Claims

1. Aluminium electrolytic capacitor, in particular for use in capacitor banks, which is fitted in a housing (1) provided with cooling fins (2), **characterized in that** the housing (1) is formed as an aluminium casting.

2. Aluminium electrolytic capacitor according to Claim 1, **characterized in that** the cooling fins (2) are formed over the surface of two opposite housing sides (5, 6).

3. Aluminium electrolytic capacitor according to Claim 1 or 2, **characterized in that** the housing (7) is designed to accommodate a plurality of capacitors (8, 9, 10, etc).

4. Aluminium electrolytic capacitor according to Claim 3, **characterized in that** the housing (1) has an insulating coating on its inner side.

5. Aluminium electrolytic capacitor according to Claim 3, **characterized in that** insulating cups to accommodate the capacitors are arranged in the housing (1).

6. Aluminium electrolytic capacitor according to one of Claims 1 to 5, **characterized in that** a plurality of capacitors (8, 9, 10, etc) in a capacitor bank are connected by means of ribbon cables (11) which are of sandwich-like structure.

7. Aluminium electrolytic capacitor according to Claim 6, **characterized in that** the ribbon cables (11) are of coaxial structure.

## Revendications

1. Condensateur électrolytique en aluminium, destiné à être utilisé notamment dans des batteries de condensateur, qui est inséré dans un godet (1) muni d'ailettes (2) de refroidissement,
**caractérisé**
**en ce que** le godet (1) est constitué sous la forme d'une pièce coulée en aluminium.

2. Condensateur électrolytique en aluminium suivant la revendication 1,
**caractérisé**
**en ce que** les ailettes (2) de refroidissement sont constituées à plat sur deux côtés (5, 6) opposés du godet.

3. Condensateur électrolytique suivant la revendication 1 ou 2,
**caractérisé**
**en ce que** le godet (7) est constitué de manière à recevoir plusieurs condensateurs (8, 9, 10, ...).

4. Condensateur électrolytique suivant la revendication 3,
**caractérisé**
**en ce que** le godet (1) a sur son côté intérieur un revêtement isolant.

5. Condensateur électrolytique suivant la revendication 3,
**caractérisé**
**en ce qu'**il est disposé dans le godet (1) des pots isolants destinés à recevoir les condensateurs.

6. Condensateur électrolytique suivant l'une des revendications 1 à 5,
**caractérisé**
**en ce que** le câblage de plusieurs condensateurs (8, 9, 10, ...) en une batterie de condensateurs s'effectue au moyen de conducteurs (11) à ruban du type sandwich.

7. Condensateur électrolytique suivant la revendication 6,
**caractérisé**
**en ce que** les conducteurs (11) à ruban sont constitués de manière coaxiale.
